(19) Europäisches Patentamt
European Patent Office
Office européen des brevets

(11) Publication number: **0 170 295 B1**

# (12) EUROPEAN PATENT SPECIFICATION

(45) Date of publication of patent specification: **02.05.90**

(51) Int. Cl.$^5$: **C 03 C 1/00**

(21) Application number: **85110293.9**

(22) Date of filing: **10.10.83**

(60) Publication number of the earlier application in accordance with Art. 76 EPC: **0 107 943**

## (54) Precursor for carbon-containing monolithic glasses.

(30) Priority: **29.10.82 US 437786**

(43) Date of publication of application:
**05.02.86 Bulletin 86/06**

(45) Publication of the grant of the patent:
**02.05.90 Bulletin 90/18**

(84) Designated Contracting States:
**DE FR GB**

(56) References cited:
**US-A-3 927 224**
**US-A-4 472 510**

**CERAMIC ENGINEERING AND SCIENCE PROCEEDINGS, vol. 4, no. 9/10, September/October 1983, pages 704-717, Columbus, Ohio, US; F.K. CHI: "Carbon-containing monolithic glasses via the sol-gel process"**

(73) Proprietor: **DOW CORNING CORPORATION**
**3901 S. Saginaw Road**
**Midland Michigan 48640 (US)**

(72) Inventor: **Baney, Ronald Howard**
**5704 Lantern Lane**
**Midland Michigan 48640 (US)**
Inventor: **Chi, Frank Kang**
**200 Chesterfield Court**
**Midland Michigan 48640 (US)**

(74) Representative: **Laredo, Jack Joseph et al**
**Elkington and Fife Beacon House 113 Kingsway**
**London, WC2B 6PP (GB)**

**EP 0 170 295 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Inorganic oxides are relatively important constituents of many of the modern technological products in use today. They are especially important in the ceramics and glass industries and have been under investigation for many years for many varied uses.

Typically, solid melting techniques were used to blend inorganic oxides to make glass or ceramics. Thus, oxides were, and still are for most applications, ground up into fine particles, with silicon dioxides being the major constituent in moste cases, and incorporated into glass matrices by melting and blending at temperatures of up to 2000°C. Not only is this process cumbersome but the method leads to products with different phases causing inhomogeneity in the product which leaves a physical weakness in the final product.

Also, owing to the melting method's inefficiency, only certain applications can be undertaken, as the very high temperatures used to ceramify the glasses also limit the types of substrates that can be used. Moreover, the method consumes tremendous amounts of energy.

The traditional melting method for obtaining glasses has been substituted in part by a method for obtaining glasses which has, as a significant feature, the ability to obtain glasses at low temperatures. In the mid-1970's, several investigators were involved in this new process, now called the sol-gel process. The advantages, according to the investigators, are several-fold. For example, the new method leads to homogeneous products because of the fact that the precursor materials are liquids and blendability is enhanced using liquids as opposed to solids. Also, the sol-gel process allows low temperature operation to acquire the gels, which leads to cost-savings and fewer hazards in handling the materials. The new sol-gel process also allows the preparation of purer glassy products because it is possible to distill the starting materials that go into the preparation of the sol.

Attempts at defining what the sol-gel process could accomplish came in a disclosure by Bulent Yoldas in U.S. Patent No. 3,681,113, issued August 1, 1972. A companion patent to Yoldas issued June 11, 1974 as U.S. Patent No. 3,816,163. Yoldas disclosed the use of a gel-free solution of a hydrolyzed and partially condensed silicon polymer which he had prepared from tetrafunctional silanes. Such materials were non-carbon containing and were used for treating porous refractory bricks. These materials were neither sols nor gels but were the precursor materials from which sols and gels were eventually made by Yoldas and others. What is important about the disclosure is that it showed that there was a liquid path to useful metal oxides that lead to intractable solids in the sol stage.

Subsequent to this disclosure, in U.S. Patent No. 3,941,719, issued March 2, 1976, Yoldas disclosed the preparation of a stable alumina sol-gel which he was able to convert to alpha alumina by heating. A companion patent to Yoldas issued March 16, 1976 as U.S. Patent No. 3,944,658. Shortly thereafter, three Japanese investigators disclosed the details of what occurs in the sol, and the gel, during the preparation of the sol and the gel and the conversion of the gel to a glass; Masayuki Yamane, Shinji Aso and Tervo Sakaino, Journal of Materials Science 13 (1978) 865—870 and Journal of Materials Science 14 (1979) 607—611.

The years 1980 and 1981 were very prolific years in terms of the numbers of investigators studying the sol-gel process. Yoldas, in U.S. Patent No. 4,225,635, issued September 30, 1980, disclosed the preparation and use of a boron alkoxide/silicon alkoxide sol-gel for coating vitreous silica substrates and two Japanese investigators, Kanichi Kamiya and Sumio Sakka, Journal of Materials Science 15 (1980) Letters 2937—2939 disclosed the preparation of $TiO_2/SiO_2$ glasses starting with metal oxides. Yoldas, in Ceramic Bulletin, Vol. 59, No. 4 (1980) 479—483, disclosed the use of silicon tetraethoxide and aluminum sec-butoxide to form monolithic materials from a sol-gel process and Kamiya, Sakka and others (above) disclosed the preparation of glass films from sol-gels of silicon alkoxides and other metal alkoxides.

Finally, in terms of compositions, Levene, in U.S. Patent No. 3,640,093, issued February 8, 1972, disclosed the combination of silicon alkoxides, which are partially hydrolyzed, with metal alkoxides and/or metal salts, to form clear organic solvent solutions which are convertible to clear gels and in Levene, U.S. Patent No. 3,811,918, there is disclosed a combination of partially hydrolyzed silicon alkoxides, metal alkoxides and metal compounds to form clear organic solvent solutions which are then converted to glass coatings. It should be noted that both Levene patents disclose carbon containing silicon alkoxides as $SiX_nY_{4-n}$ wherein X is hydrogen, phenyl or an alkyl of 1 to 6 carbon atoms but do not disclose the aqueous colloidal solutions of the materials with other metal oxides nor does Levene disclose the eventual firing of these compositions in an inert atmosphere or a vacuum. Levene shows a careful step-by-step approach to obtain partially hydrolyzed silicon alkoxides which are then further reacted with metal alkoxides to form metallosiloxanes which are eventually fired in air to give granular oxide products. It should be especially noted that Levene's materials are non-aqueous, solvent solutions as opposed to the compositions of the instant invention.

There are no examples in either of the Levene patents which deal with the use of carbon containing silicon alkoxides, wherein the carbon is bonded directly to the silicon atom. The inclusion of carbon in this form changes the molecule considerably and this change leads to entirely new products. The fact that the pyrolysis of the gels is carried out in an inert atmosphere, as opposed to air, also leads to different products having different properties.

European Application 0107943 (83 306113.8) from which this application has been divided discloses as

its invention carbon-containing monolithic glasses which are prepared by pyrolyzing gels in an inert atmosphere. These gels are prepared from solution or sols prepared by hydrolyzing carbon-containing silicon alkoxides in combination with colloidal metal oxides or metal alkoxides. Certain of the solution or sol compositions useful in this invention are themselves novel compositions of matter. What is meant by "carbon-containing" in this invention is that the carbon is bonded directly to the silicon atoms in the molecules.

For the purposes of the said invention, the "sol" and "solution" are used interchangeably, recognizing that solutions and sols are different in physical characteristics. If one needs to know whether or not the composition is a sol or a solution, that fact can be easily noted by subjecting the liquid composition to a simple test which includes placing a glass vessel of the composition between one's line of vision and a strong light source. If the composition shows a bluish cast, then it is a true sol. This is known as the Tyndall effect. If the composition is clear, then it is a true solution.

Thus, one aspect of the invention of EP 0107943 (83 306113.8) is a method of preparing a carbon-containing monolithic glassy ceramic which comprises pyrolyzing in an inert atmosphere, or a vacuum, until a carbon-containing monolithic glassy ceramic is obtained, a product comprising a stable gel selected from a group consisting essentially of

(A) a gel obtained from an aqueous solution or sol of an organosilsesquioxane having the unit formula $RSiO_{3/2}$ wherein R is selected from a group consisting essentially of (a) $CH_2{=}CH—$; (b) $CH_2{=}CHCH_2—$; (c) $C_6H_5—$; (d) alkyl radicals of 1 to 4 carbon atoms; (e) substituted monovalent organic radicals, and (f) mixtures of (a), (b), (c), (d) and (e);

(B) a gel obtained from a mixture of an aqueous solution or a sol of an organosilsesquioxane from (A), and a colloidal metal oxide or a mixture of colloidal metal oxides selected from a group consisting essentially of (i) $SiO_2$, (ii) $Al_2O_3$, (iii) $ZrO_2$, (iv) $TiO_2$, (v) $SnO_2$, (vi) $ZrSiO_4$, (vii) $B_2O_3$, (viii) $La_2O_3$ and (ix) $Sb_2O_5$;

(C) a gel obtained from a mixture of an aqueous solution or sol of an organosilsesquioxane from (A), and a metalalkoxide, or a mixture of metal alkoxides having the general formula $M(OR')_x$ wherein M is any metal from a metal alkoxide which hydrolyses and polymerizes in the presence of water, R' is an alkyl radical of 1 to 4 carbon atoms and $x$ has a value equivalent to the metal ion valence.

The method in its general aspects constitutes the hydrolysis or cohydrolysis of certain organosilicon alkoxides either independently or in the presence of colloidal metal oxides or metal alkoxides; the formation of an aqueous sol from the hydrolyzate; the controlled formation of a gel from the sol and the eventual pyrolysis of the gel at higher temperatures in an inert atmosphere or a vacuum to form a glassy ceramic.

The glassy ceramics formed by this method are essentially monolithic meaning they constitute one massive undifferentiated whole. The molecular make-up of the monolith is dependent on the type and form of the starting materials. One such type of starting material is the organosilsesquioxanes obtained from alkoxysilanes having the general formula $RSi(OR'')_3$, by hydrolysis, i.e. composition (A). Thus, $RSi(OCH_3)_3$, for example, can be hydrolyzed to give $RSiO_{3/2}$ and by-produced methanol. The $RSiO_{3/2}$ hydrolyzate is then subjected to aging, either with or without the use of heat to give a low molecular weight oligomer or short chain polymer which stays in aqueous solution. It may form an aqueous sol.

Thus, for purposes of the said invention, R can be selected from the $CH_2{=}CH—$ radical; the $CH_2{=}CHCH_2—$ radical; alkyl radicals of 1 to 4 carbon atoms such as methyl, ethyl, propyl and butyl radicals; the phenyl radical; the substituted monovalent organic radicals, such as, for example,

$CH_2{=}CHC(CH_3)COO(CH_2)_3—$;

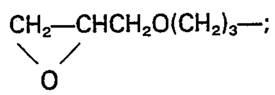

$HS(CH_2)_3—$; $Cl\ (CH_2)_3—$;

$NH_2(CH_2)_2NH(CH_2)_3—$;

and the like. These R groups can also be mixed; that is, R can be selected so as to give, for example, $CH_3SiO_{3/2}$ and $C_6H_5SiO_{3/2}$. There are a number of methods by which the aqueous solution or sol can be made. For example, each alkoxysilane can be hydrolyzed separately and then the hydrolyzates can be combined with each other or the alkoxysilanes can be combined in the proper ratios and cohydrolyzed. When the hydrolysis is complete, the combined materials are then aged, either with or without the use of heat, to cause them to react and form a copolymeric material and an aqueous solution or sol.

A second type of starting material is an aqueous solution or sol obtained from a combination of colloidal metal oxides and the organosilsesquioxanes described in (A), above. This is composition (B). There are a number of methods to achieve this combination. For example, the colloidal metal oxides can be mixed with the alkoxysilanes, for example, colloidal silica and $CH_3Si(OCH_3)_3$, and the water present in the colloidal metal oxide hydrolyzes the alkoxysilane to $CH_3SiO_{3/2}$ and by-produced methanol. Upon aging, the colloidal silica and the $CH_3SiO_{3/2}$ hydrolyzate react to form —Si—O—Si— bonds. A second method to

achieve this combination is to prehydrolyze the alkoxysilane and then combine this prehydrolyzate with the colloidal metal oxides and then age the materials to form an aqueous solution or sol. It is contemplated within this invention that mixtures of colloidal metal oxides can be used.

A third type of starting material is an aqueous solution or sol obtained from a combination of metal alkoxides and the organosilsesquioxane from the starting material set forth as composition (A), above. This combination is composition (C). There are a number of methods for obtaining this combination. The alkoxysilane precursors for the organosilsesquioxane can be combined with the metal alkoxides and cohydrolyzed. The cohydrolyzate is then aged, with or without the aid of heat, to give the aqueous solution or sol. A second, more refined method, however, is to hydrolyze the metal alkoxides by themselves and then add them to the alkoxysilane precursors. The water from the metal alkoxide hydrolyzate then hydrolyzes the alkoxysilanes to the silsesquioxane and the two materials react during aging to form a copolymer and the aqueous solution or sol. A third method for this composition is to hydrolyze each component separately and combine the hydrolyzates in the appropriate ratios, then age the combination to form the aqueous solution or sol. It is contemplated within the scope of this invention that mixtures of metal alkoxides can be used.

For purposes of the said invention, the hydrolysis step should be carried out in the presence of at least 1 equivalent of water for each equivalent of alkoxy attached to a metal atom of the starting materials. For purposes of this invention, however, whenever the word "metal" is used, it should also be construed to incldue "metalloids" such as, for example, silicon. It has been found that greater than 1 equivalent of water for each equivalent of alkoxy gives better sols in that the sols clear more rapidly, stay clear and are more stable. Moreover, even though only one equivalent of water is required for hydrolysis, in practice, in order to form a sol, more water than is necessary for hydrolysis is required herein. One can expect good results upon hydrolysis when there are used at least 2 moles of water and up to 100 moles of water. Less than 1 equivalent of water per alkoxy group leads to insufficient hydrolysis of the alkoxy groups wherein the sol and eventually the gel will contain residual alkoxy groups which have been found detrimental in some formulations for some applications. More than 200 equivalents of water per equivalent of alkoxy on the metal atoms does not appear to lead to any significant improvements in the glassy ceramics.

To effect the hydrolysis, it has been found that solvents are helpful. In this invention, it has been found that the best solvents are water-miscible solvents. It is preferred to use water-miscible alcohols herein or mixtures of water-miscible alcohols. Especially suitable are alcohols such as methanol, ethanol, *n*-propanol, isopropanol, *n*-butanol, isobutanol, *t*-butanol and lower molecular weight ether alcohols such as ethylene glycol monomethyl ether. Sometimes it is necessary to use small amounts of non-water-miscible solvents such as toluene.

Although these reactions can be carried out in basic pH's, the hydrolysis reactions generally require the use of an acidic pH in order to maintain the stability of the sols. Thus, for purposes of this invention, it is preferred to add organic or inorganic acids to the hydrolysis medium. Preferred for this invention is the addition of either acetic acid or hydrochloric acid. Depending on the particular composition that is being hydrolyzed, the pH should be as low as 1.5 or lower while it is appropriate to carry out some of the hydrolysis reactions at a pH of near 6. For example, the hydrolysis of composition (A) can take place at any pH below 7. If the pH is 6 or less, the hydrolyzate is more stable and thus this hydrolysis is preferred to be carried out at less than a pH of 6. Composition (C), on the other hand, requires that the hydrolysis pH be 3, and preferably the pH should be less than 3. Raising the pH of the hydrolysis mixture leads to gelation. For example, if the hydrolysis is carried out at a pH of 3, the sol, if left standing at a pH of 5 would gel in about 30 days. If it were left standing at a pH of 8.5, it would gel in about 1 hour. Obviously, raising the pH to 10 causes almost immediate gelation. The details regarding the hydrolysis procedures herein can be found in the examples.

Levene in US—A—3 927 224 discloses a composition comprising a partially hydrolyzed alkoxysilane and an aqueous solution of a metal compound which decomposes to a metal oxide below about 600°C, the metal being, for example, Zr, B, Sn, La. This composition forms a clear solution which subsequently converts to a clear gel, this latter being converted to a glass by heat treatment.

Alkoxysilanes useful in the invention of the parent application EP—A—0107943 (83 306113.8) are the silanes methyltrimethoxysilane, methyltributoxysilane, phenyltrimethoxysilane, phenyltriethoxysilane, phenyltripropoxysilane, and phenyltributoxysilane.

The present application is concerned with materials from which the carbon containing monolithic glassy ceramics which are the subject of the parent application can be formed. As detailed above any one of three possible gels (A), (B) and (C) are obtained from corresponding aqueous solutions or sols of organosilsesquioxane as defined above and the stable gel which is selected is dried and paralyzed in an inert atmosphere or a vacuum until the carbon containing monolithic glassy ceramic product which is desired is obtained.

The present invention is concerned with a dispersion of a colloidal metal oxide, or a mixture of colloidal metal oxides in a water-alcohol solution of the partial condensate of a silanol which may be employed to produce such a stable gel which is thereupon converted as described above to form such carbon containing monolithic glassy ceramic products.

According to the present invention therefore we provide a composition of matter comprising a dispersion of a colloidal metaloxide, or a mixture of colloidal metal oxides in a water-alcohol solution of the

partial condensate of a silanol having the formula $RSi(OH)_3$ in which R is selected from the group consisting of alkyl radicals of 1 to 3 inclusive carbon atoms or the phenyl radical, or mixtures thereof, said composition containing 25 to 60 weight percent solids, said solids comprising 1 to 70 weight percent of colloidal oxide or mixtures thereof and 30 to 99 weight percent of said partial condensate, wherein the metal oxides are selected from a group consisting of (i) $ZrO_2$, (ii) $SnO_2$, (iii) $ZrSiO_4$, (iv) $B_2O_3$ and (v) $La_2O_3$.

The colloidal metal oxides useful in this invention are those colloidal metal oxides which are stable long enough to be able to combine them with the organosilsesquioxanes.

Such colloidal metal oxides are selected from a group consisting essentially of (i) $ZrO_3$, (ii) $SnO_2$, (iii) $ZrSiO_4$, (iv) $B_2O_3$ and (v) $La_2O_3$. $ZrO_2$ and $ZrSiO_4$ amongst the latter materials can be purchased in sol form from Nyacol Inc., Ashland, Mass., U.S.A.. Some of these colloidal sols are acidic in the sol form and, therefore, when used in conjunction with this invention during hydrolysis, additional acid need not be added to the hydrolysis medium. These colloidal sols can also be prepared by a variety of methods. For the purposes of this invention and in order to preclude the incorporation of contaminants in the sols, it is preferred to hydrolyze the alkyl orthoesters of the metals in an acid pH range of 1 to 3, in the presence of a water miscible solvent wherein the colloid is present in the dispersion in an amount of 0.1 to 10 weight percent.

The sols of this invention are prepared from the starting materials described above. The sols are generally transparent or translucent depending on their particular composition. For use in preparing the gels referred to above, the sols are forced to gel by increasing the pH as is described in patent application EP—A—0107943 referred to above. Similarly the pyrolysis of the gels which result from the forced gellation of the materials which are the subject of this application is described in parent application number EP—A—0107943. The advantages of the carbon-containing glassy ceramics which can be obtained from the compositions of the present invention and the advantages of the process of making such ceramics are also discussed in parent application EP—A—0107943.

The following examples serve to illustrate the invention but should not be construed to limit the invention from what is set forth in the claims.

Firing of the gels was carried out in a Lindeberg three zone tube furnace or an Astro graphite resistance furnace using argon, or helium. All percentages are by weight unless otherwise specified.

Examples 1 to 6, 8 to 10 and 12 and Tables I to IV do not illustrate the invention and are only presented for the sake of completeness in the understanding of the remaining examples, i.e. Examples 7 and 11, respectively.

Example 1

One mole (136 g) of $CH_3Si(OCH_3)_3$ was combined with six moles (108 g) of water and 95 g of methanol in a round-bottomed glass flask, with stirring. The pH of the solution was adjusted from 3.24 to 7.49 using diluted (1 weight %) saturated aqueous ammonium hydroxide solution. The solution was then poured into several one ounce glass vials. A clear white gel was formed within three days in each vial. Approximately 24 hours after gelation, shrinkage of the gel took place, and some of the methanol separated from the gel. At that time, the vial cap was replaced with aluminum foil and a number of holes were made in the foil to regulate the drying of the gel. About three weeks later, 90% of the drying process was done. The gel was then heated at 60°C for 24 hours and 150°C for another 24 hours. The dry gel was white, translucent, brittle and rigid. Finally, the dry gel was slowly fired to 1200°C in the presence of the inert gas argon. After firing to 1200°C, the material was black, with density, height and diameter of 1.6 g/cc, 0.65 cm and 0.95 cm respectively. The weight loss, volume shrinkage and linear shrinkage of the fired gel were 36%, 70% and 32%, respectively. Si, C and oxygen analyses indicated that the fired dry gel had an empirical formula of $SiO_{1.5}C_{0.5}$.

Example 2

A colloidal dispersion was prepared by adding 136 g of methyltrimethoxysilane to 164 g of an aqueous colloidal silica dispersion. This colloidal silica, Nalcoag 1034A, manufactured by Nalco Chemical Co., U.S.A. contains 34 wt % $SiO_2$ of approximately 20 millimicron particle size and has a pH of 3.2. Upon rapid stirring, a homogeneous phase was obtained and an exotherm was observed. After cooling to room temperature, the colloidal dispersion was split into three portions. The pH of the portions was adjusted to 6.0, 7.0 and 7.5 respectively, with 1.0 weight % saturated aqueous $NH_3$ solution. The colloidal dispersions with pH=6.0, 7.0, and 7.5 gelled in 40, 16 and less than 10 hours, respectively. Gel shrinkage was observed much earlier in the sample of pH=7.5.

Gel samples of pH=7.0, sample A, and 7.5, sample B, were dried at room temperature, or air dried according to the procedures described in Example 1. After drying in air approximately two weeks, the gel samples were heat treated at 60°C for at least 24 hours and then 150°C for another 24 hours. The gel made from the pH=7.5 colloidal dispersion fractured, due to thermal stress, much more easily than its pH=7.0 counterpart. The heated gels were white, translucent, brittle and rigid. Finally, the heated gels were fired to 1200°C in the presence of helium. The fired gels were black and harder than fused quartz. They scratched glass easily. The results can be found on Table 1.

A compression test (ASTM-D-695) was done on a fired gel with a composition similar to Sample B. The compressive strength of that piece of fired gel (height×diameter=1.0×1.5 cm) was 26,000 $lbs/in^2$.

Example 3

Gels fired to 1200°C were prepared from colloidal dispersions (sample A of Example 2) each with a pH of 7.5 according to the method described in Example 2. These gels had dimensions of approximately 5 cm in height and 0.7 cm in diameter. The weight loss upon firing these samples was 20%. A three point flexural strength test using ASTM-D-790 was done on two of these samples. The results were about 18,000 lbs/in$^2$ for both samples. The volume resistivity and thermal expansion coefficient of these samples were found to be $6\times10^{10}$ Ohm-cm and $1.0\times10^{-6}$/°C, respectively.

Example 4

$C_6H_5Si(OCH_3)_3$ was incorporated into the $CH_3Si(OCH_3)_3$/colloidal $SiO_2$ sol in an attempt to increase the carbon content of the fired gel product. The amounts of $C_6H_5Si(OCH_3)_3$ used are given in Table II.

The compositions of the dry gels in weight percent before firing and the weight loss after firing to 1200°C in argon are listed in Table III.

The procedures for making dry gels and final ceramic materials were the same as those described in Examples 1 and 2. The ceramic materials made in Samples D and F were large monolithic glasses, Sample H was weak and powdery. Unfired dry gels from Samples C, E and G were fractured due to thermal stress. More $SiO_2$ was present in Samples, D, F and H than in Samples C, E and G. The final formed ceramic materials were hard, amorphous and black.

Example 5

In a manner similar to Example 2, the following examples of $SiO_2/CH_3SiO_{3/2}$ where the weight ratio was varied were made from $CH_3Si(OCH_3)_3$ and Nalcoag 1034A. Compositions of the dry gels and % weight loss after firing to 1200°C are listed in Table IV (below).

On the whole, the higher the $SiO_2$ concentration, the less shrinkage and fracture were found in the gel. However, gels having a higher $SiO_2$ content also took longer to dry. At lower $SiO_2$ concentrations, there was much more shrinkage and fracture in the gel.

Example 6

In this example, a dry gel of $Al_2O_3$—$CH_3SiO_{3/2}$ was prepared. A colloidal dispersion was prepared by mixing 20 g of methyltrimethoxysilane and 105 g acidic colloidal alumina monohydrate. Colloidal alumina monohydrate containing 20.0 weight percent solids was supplied by Nyacol Inc., Ashland, Massachusetts, U.S.A. Upon rapid stirring, a homogeneous phase was obtained and an exotherm was observed. After cooling to room temperature, the pH of the colloidal dispersion was adjusted from 3.2 to 4.2 with 1.0 weight % saturated $NH_3$ solution. A small portion of the colloidal dispersion was poured into a small vial. The dispersion gelled in less than 15 hours and the gel dried in about three weeks. The dry gel containing 68% $Al_2O_3$ and 32% $CH_3SiO_{3/2}$ was fired to 1200°C in an argon atmosphere. The weight loss upon firing was 15%. The fired gel (2.5 cm in diameter and 1 cm in thickness) was translucent (greyish-white), very hard and scratched glass easily. X-ray diffraction indicated small size crystallites (less than 100 Angstroms) of $Al_2O_3$ were present in the fired gel. Further firing from 1200 to 1450°C for 4 hours gave a weight loss of 2% and resulted in no apparent change in shape. The presence of Mullite in the sample was indicated by X-ray diffraction examination.

Example 7

66.8 g of zirconia sol which was 19.0 weight percent solids and stabilized by acetate ions, with a pH of 3.8, manufactured by Nyacol, Inc., was mixed with 66.7 g of methyltrimethoxysilane. The mixed colloidal dispersion with a pH of about 4.6 gelled in 3 days, and the dry gel was obtained in about three weeks. The dry gel contained 30% $ZrO_2$ and 70% $CH_3SiO_{3/2}$. After firing to 1200°C in the presence of argon, the dry gel broke into a few small pieces having approximate dimensions of 2 cm×1 cm×1 cm, and lost 26% of its original weight. The fired gel is black and hard. A number of pores (1 mm in size) were present on the surface of the fired gels. A piece of the fired gel was further heated at 1000°C in air for four hours. No apparent change in weight or shape was observed.

Example 8

3.3 g of Al (isobutoxy)$_3$ was mixed with 5.10 g $CH_3Si(OCH_3)_3$ and the mixture was shaken for 15 minutes. 10.0 g of distilled $H_2O$ with the pH adjusted to 3.0 using acetic acid, were then added and the resulting solution was shaken 60 minutes. The solution formed a milky white gel which was air dried and then dried to 200°C prior to firing. The dry gel contained 65% $CH_3SiO_{3/2}$ and 35% $Al_2O_3$. The dry gel was fired to 1200°C in argon and was a broken piece having a dark grey color. The weight loss after firing was 20%. X-ray diffraction analysis of the fired material showed it was amorphous.

Example 9

In this example, $CH_3Si(OCH_3)_3$ was used in conjunction with *n*-butyl zirconate. This sample was made by mixing 5.5 g $CH_3Si(OCH_3)_3$ with 2.5 g acetic acid, followed by addition of 3.9 g *n*-butyl zirconate and finally 5.8 g distilled water. The clear, yellow liquid gelled within 8 days. The gel was air dried and then oven dried to 100°C prior to being fired. The milky white solid dry gel containing 68% by weight $CH_3SiO_{3/2}$ and

32% by weight $ZrO_2$ was fired to 1200°C in helium to give a charcoal black rough solid which retained its shape during firing. The weight loss upon firing was 27%.

Example 10

A gel was made by mixing 30 g Ti(isopropoxy)$_4$, 25 g acetic acid, and 25 g $CH_3Si(OCH_3)_3$, followed by the addition of 45.5 g acidic colloidal $SiO_2$, Nalcoag 1034A. The cohydrolyzate formed a milky white gel in one day, which was air dried and then oven dried to 100°C. The dry gel had dimensions of 34.5 mm×32.5 mm×32.0 mm and contained approximately 43% $SiO_2$, 23% $TiO_2$, and 34% $CH_3SiO_{3/2}$. Upon firing to 1200°C in helium, the dried gel became charcoal black and very dense. The fired dry gel lost 13 weight percent of its original weight and had dimensions of 26.3 mm×24.9 mm×25.0 mm. The density of the fired material was 2.0 g/cc.

Example 11

A zirconia containing gel was made using 30.4 gms of $CH_3Si(OCH_3)_3$; 23 gms of $C_6H_5Si(OCH_3)_3$ and 100 gms of 20 weight percent solids aqueous colloidal zirconia. The mixture was stirred and 10 cc of acetic acid were added. After a short while, the mixture became compatible and cleared. The sol was easy to gel.

Example 12

A sol was prepared by combining the following ingredients. $CH_3Si(OCH_3)_3$ (25 gms); $C_6H_5Si(OCH_3)_3$ (20 gms) and thirty grams of water. The mixture warmed slightly upon shaking for 1/2 hour and some precipitation was observed initially but cleared upon stirring. To this mixture was added 5 drops of acetic acid. The sol was clear and compatible and represents a 50/50 weight ratio of $C_6H_5SiO_{3/2}$ and $CH_3SiO_{3/2}$ in an aqueous-alcoholic sol. This sol can be readily gelled by raising the pH of the sol.

TABLE I

| Sample | pH | Weight loss | Density (g/cc) | Linear shrinkage | Volume shrinkage | Height× diameter (cm) | Empirical formula |
|---|---|---|---|---|---|---|---|
| A | 7.5 | 15% | 1.8 | 22% | 51% | 3.6×1.5 | $SiO_{2.0}C_{.31}$ |
| B | 7.0 | 13% | 1.9 | 20% | 50% | 3.9×1.5 | $SiO_{1.9}C_{.26}$ |

TABLE II

| Sample No. | $C_6H_5Si(OCH_3)_3$ | $CH_3Si(OCH_3)_3$ | Colloidal silica sol |
|---|---|---|---|
| C | 10 g | 90 g | 58 g |
| D | 10 g | 90 g | 116 g |
| E | 20 g | 80 g | 56 g |
| F | 20 g | 80 g | 112 g |
| G | 30 g | 70 g | 5.5 g |
| H | 30 g | 70 g | 109 g |

TABLE III

| Sample No. | % $C_6H_5SiO_{3/2}$ | % $CH_3SiO_{3/2}$ | % $SiO_2$ | % Wt. loss |
|---|---|---|---|---|
| C | 9 | 63 | 28 | 12 |
| D | 7 | 49 | 44 | 10 |
| E | 18 | 55 | 27 | 10 |
| F | 14 | 44 | 42 | 10 |
| G | 27 | 48 | 25 | 10 |
| H | 21 | 38 | 41 | 10 |

TABLE IV

| Sample No. | % $CH_3SiO_{3/2}$ | % $SiO_2$ | % Weight loss |
|---|---|---|---|
| I | 80 | 20 | — |
| J | 70 | 30 | — |
| K | 60 | 40 | — |
| L | 55 | 45 | 26 |
| M | 40 | 60 | 11 |
| N | 30 | 70 | 10 |
| O | 20 | 80 | — |
| P | 10 | 90 | 3 |

**Claim**

A composition of matter comprising a dispersion of a colloidal metal oxide, or a mixture of colloidal metal oxides in a water-alcohol solution of the partial condensate of a silanol having the formula $RSi(OH)_3$ in which R is selected from the group consisting of alkyl radicals of 1 to 3 inclusive carbon atoms or the phenyl radical, or mixtures thereof, said composition containing 25 to 60 weight percent solids, said solids comprising 1 to 70 weight percent of colloidal oxide or mixtures thereof and 30 to 99 weight percent of said partial condenaste, wherein the metal oxides are selected from a group consisting of (i) $ZrO_2$, (ii) $SnO_2$, (iii) $ZrSiO_4$, (iv) $B_2O_3$ and (v) $La_2O_3$.

**Patentanspruch**

Zusammensetzung enthaltend eine Dispersion eines kolloidalen Metalloxides oder einer Mischung kolloidaler Metalloxide in einer Wasser-Alkohollösung des Teilkondensates eines Silanols der Formel $RSi(OH)_3$, in der R aus der aus Alkylresten mit 1 bis einschließlich 3 Kohlenstoffatomen oder Phenylresten oder Mischungen derselben bestehenden Gruppe ausgewählt ist, wobei die Zusammensetzung 25—60 Gew.-% Feststoffe enthält und die Feststoffe enthalten 1—70 Gew.-% kolloidales Oxid oder Mischungen derselben und 30—99 Gew.% des Teilkondensates, und wobei die Metalloxide aus der aus (i) $ZrO_2$, (ii) $SnO_2$, (iii) $ZrSiO_4$, (iv) $B_2O_3$ und 20 (v) $La_2O_3$ bestehenden Gruppe ausgewählt sind.

**Revendication**

Une composition de matière comprenant une dispersion d'un oxyde de métal colloïdal, ou d'un mélange d'oxydes de métaux colloïdaux, dans une solution eau-alcool du condensat partiel d'un silanol ayant la formule $RSi(OH)_3$ où R est choisi dans le groupe constitué des radicaux alkyles de 1 à 3 atomes de carbone inclusivement, du radical phényle et des mélanges de ceux-ci, cette composition contenant 25 à 60% en poids de matières solides, lesdites matières solides comprenant 1 à 70% en poids d'oxyde colloïdal ou de mélange d'oxydes colloïdaux et 30 à 99% en poids dudit condensat partiel, les oxydes de métaux étant choisis dans le groupe constitué par (i) $ZrO_2$, (ii) $SnO_2$, (iii) $ZrSiO_4$, (iv) $B_2O_3$ et (v) $La_2O_3$.